# EUROPÄISCHE PATENTANMELDUNG

(11) **EP 2 669 659 A1**
(43) Veröffentlichungstag der Anmeldung: **04.12.2013**
(21) Anmeldenummer: 12170380.5
(22) Anmeldetag: 01.06.2012
(51) Int. Cl.: G01N 21/35, G01N 21/85, C22B 1/20

(54) **Verfahren zur Kalibrierung eines Rohmaterialanalysesystems**

(71) Anmelder: ABB Schweiz AG, 5400 Baden (CH)
(72) Erfinder: Blahous, Leopold, 5430 Wettingen (CH); Zwicky, Christoph, 8606 Greifensee (CH); Müller, Sebastian, 8006 Zürich (CH); Fueeg, Tobias, 4600 Olten (CH)
(74) Vertreter: ABB Patent Attorneys

(57) **Zusammenfassung**

Gegenstand der Erfindung ist es, dass ein System, welches zur Analyse von Rohmaterial verwendet wird, im Bezug auf Feuchtigkeit kalibriert wird. Hierbei wird zuerst eine Probe des Rohmaterials getrocknet, das Gewicht der Probe im trockenen Zustand ermittelt und die Probe im trockenen Zustand durch das verwendete Analysesystem analysiert. Danach wird der trockenen Probe eine definierte Wassermenge hinzugegeben, der sich daraus ergebende Feuchtigkeitsgehalt bestimmt und die Probe in befeuchteten Zustand durch das verwendete Analysesystem analysiert. Dieser Vorgang wird für verschiedene Wassermengen wiederholt und die erhaltenen Analysedaten mit den dazugehörigen Feuchtigkeitsgehalten festgehalten. Die daraus resultierende Kalibrierung wird zur Feuchtigkeitsbestimmung im Rohmaterial auf dem Transportband verwendet.

## Beschreibung

### TECHNISCHES GEBIET

Die vorliegende Erfindung bezieht sich auf das Gebiet der Analyse von Rohmaterial. Sie betrifft ein Verfahren zur Kalibrierung eines Rohmaterialanalysesystems in Bezug auf Feuchtigkeit.

### STAND DER TECHNIK

Bei einer Verarbeitung von Rohmaterial, insbesondere von Erzen und Rohmaterial zur Zementherstellung, werden häufig Gurtförderanlagen eingesetzt um das Rohmaterial dem nächsten Verarbeitungsschritt zuzuführen. Um den Verarbeitungsprozess zu steuern, zu optimieren oder zu überwachen, werden häufig Analysesysteme eingesetzt, welche die Zusammensetzung des Materials während des Transportes messen. Solche Analysen, beispielsweise mittels Neutronenaktivierungs-Analyse, setzen eine trockene Probe voraus. In der Realität weist das auf der Gurtförderanlage zu analysierende Rohmaterial jedoch, neben den materialspezifischen Komponenten, auch einen nicht zu vernachlässigenden variablen Feuchtigkeitsgehalt auf, welcher in der Analyse berücksichtigt werden muss.

US 7,310,581 beschreibt ein beispielhaftes Rohmaterialanalysesystem aus dem Stand der Technik. Eine allgemein bekannte Lösung zur Berücksichtigung der Feuchtigkeit ist die Verwendung eines getrennt installierten Feuchtigkeitsmessgerätes.

### DARSTELLUNG DER ERFINDUNG

Aufgabe der vorliegenden Erfindung ist es, ein Verfahren zur Kalibrierung eines Rohmaterialanalysesystems in Bezug auf Feuchtigkeit ohne Verwendung eines zusätzlichen Feuchtigkeitsmessgerätes zur Verfügung zu stellen.

Diese Aufgabe wird durch ein Verfahren zur Kalibrierung eines Rohmaterialanalysesystems in Bezug auf Feuchtigkeit mit den Merkmalen der unabhängigen Patentansprüche gelöst. Bevorzugte Ausführungsformen sind Gegenstand der abhängigen Patentansprüche.

Gegenstand der Erfindung ist es, das ein System, welches zur Analyse von Rohmaterialien verwendet wird, in Bezug auf Feuchtigkeit kalibriert wird. Hierbei wird zuerst eine Probe des Rohmaterials getrocknet, das Gewicht der Probe im trockenen Zustand ermittelt und die Probe im trockenen Zustand durch das Analysesystem analysiert. Danach wird der trockenen Probe eine definierte Wassermenge hinzugegeben, der sich daraus ergebende Feuchtigkeitsgehalt bestimmt und die Probe in befeuchtetem Zustand durch das verwendete Analysesystem analysiert. Dieser Vorgang wird für verschiedene Wassermengen wiederholt und die erhaltenen Analysedaten mit den dazugehörigen Feuchtigkeitsgehalten festgehalten.

Eine erste bevorzugte Ausführungsform umfasst ein Abkühlen der Probe nach dem Trocknen der Probe durch Aufheizen der Probe und das Bestimmen des Gewichtes im abgekühlten Zustand, welcher Zustand auch als lufttrocken bezeichnet werden kann. Dies ermöglicht eine Bestimmung der von der Probe aufgenommen Luftfeuchtigkeit und eine Berücksichtigung dieses Wertes bei der Bestimmung des Feuchtigkeitsgehaltes.

Eine weitere bevorzugte Ausführungsform umfasst, dass die Probe während der Analyse im trockenen und befeuchteten Zustand in eine Drehbewegung in einer Ebene, welche senkrecht zum Analysesystem liegt, versetzt wird. Dies ermöglicht eine Simulation einer Transportbewegung der Mineralien auf einem Transportmittel.

Eine weitere bevorzugte Ausführungsform umfasst, dass die Probe durch ein Umwälzen des Probenmaterials in einem rotierenden Behältnis, welches auch als Rollieren bezeichnet werden kann, homogenisiert wird. Dies führt zu einer typischen Krümelung bei Sinterrohmaterialien und ermöglicht so ein möglichst praxisnahes Kalibrieren.

Eine weitere bevorzugte Ausführungsform umfasst ein mehrmaliges Homogenisieren und Analysieren der Probe in befeuchteten Zustand mit gleichem Feuchtigkeitsgehalt. Dies ermöglicht eine Mittelung der Messungen über verschiedene Partikellagen.

### KURZE BESCHREIBUNG DER FIGUREN

Nachfolgend wird die Erfindung anhand von Ausführungsbeispielen im Zusammenhang mit den Figuren näher erläutert. Die Figuren zeigen:
- Figur 1: ein Ablaufschema eines Kalibierverfahrens; und
- Figur 2: ein Diagramm mit zwei Messungen einer Sintermischung mit zwei unterschiedlichen Feuchtigkeitsgehalten.

Die in den Zeichnungen verwendeten Bezugszeichen sind in der Bezugszeichenliste zusammengefasst. Grundsätzlich sind gleiche Teile mit denselben Bezugszeichen versehen.

### WEGE ZUR AUSFÜHRUNG DER ERFINDUNG

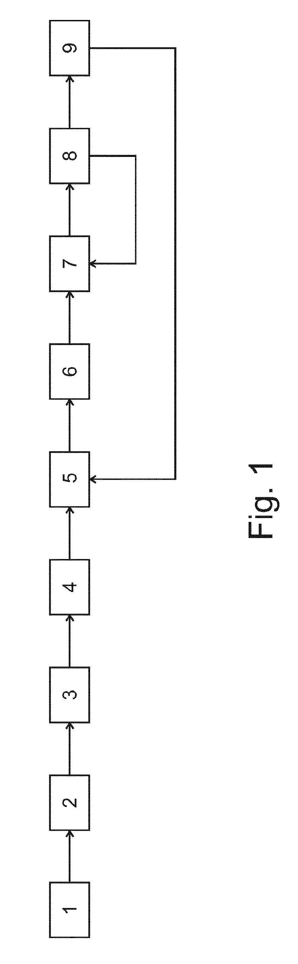

Fig. 1 zeigt ein Ablaufschema eines erfindungsgemässen Kalibierverfahrens mit Messungen für verschiedene Feuchtigkeitsgehalte, wobei für jeden Feuchtigkeitsgehalt mehrfach homogenisiert und analysiert wird. In einem ersten Schritt wird eine Probe eines zu analysierenden Materials getrocknet, beispielsweise durch ein Aufbewahren der Probe bei einer Temperatur von 105 Grad Celsius für 24 Stunden. In einem zweiten Schritt wird beispielweise mit Hilfe einer Präzisionswaage das Trockengewicht der Probe bestimmt vorzugsweise sofort nach dem Trocknen. Das Trockengewicht wird verwendet, um die prozentuale Wasserzugabe zu berechnen. In einem dritten Schritt, welcher optional ist, lässt man die Probe abkühlen und bestimmt das Gewicht der Probe nach dem Abkühlen im lufttrockenen Zustand. Während dem Abkühlen absorbiert die Probe Feuchtigkeit aus der Luft. Das Gewicht der Probe im lufttrockenen Zustand ist deshalb leicht höher als das Trockengewicht. In einem vierten Schritt wird die Probe im lufttrockenen Zustand mit Hilfe eines Nahinfrarot-Spektrometers analysiert. In einem fünften Schritt wird der Probe eine bestimmte Wassermenge zugegeben. In einem sechsten Schritt wird aus dem Trockengewicht und der hinzugegebenen Wassermenge der Feuchtigkeitsgehalt bestimmt. In einem siebten Schritt wird die Probe homogenisiert um eine gleichmässige Befeuchtung der Probe sicherzustellen. In einem achten Schritt wird die befeuchtete Probe analysiert. Der siebente und achte Schritt können mehrmals wiederholt werden. In einem neunten Schritt werden die während der Analyse gemessenen Daten mit dem dazugehörigen Feuchtigkeitsgehalt abgelegt. Die Schritte fünf bis neun werden für verschiedene Wassermengen wiederholt.

Bei der Analyse im lufttrockenen Zustand kann die Probe mehrmals analysiert werden. Nach der Durchführung einer Analyse ist es vorteilhaft, jeweils die Probe zu mischen, um die Lage der Materialteilchen zu variieren. Weiter kann nach Abschluss der Analyse die Probe gewogen werden, um Verdunstungseffekte während der Analyse zu berücksichtigen.

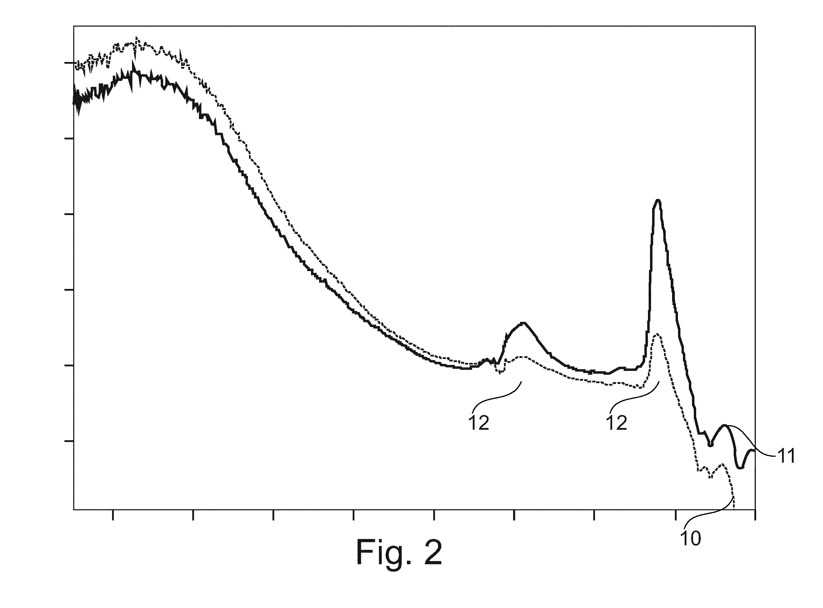

Fig. 2 zeigt zwei Nahinfrarot-Absorptionsspektren eines Sinterrohmaterials mit zwei unterschiedlichen Feuchtigkeitsgehalten. Dabei ist auf der x-Achse die Wellenzahl und auf der y-Achse die Absorption dargestellt. Eine erste Kurve 10 ist ein erstes Spektrum aus der Messung der Probe mit einem ersten Feuchtigkeitsgehalt. Eine zweite Kurve 11 ist ein zweites Spektrum aus der Messung der Probe mit einem, relativ zum ersten Feuchtigkeitsgehalt höheren, Feuchtigkeitsgehalt. In den Bändern 12 der Spektren ist eine deutliche Zunahme der Absorption mit höherem Feuchtigkeitsgehalt zu erkennen.

Auch wenn die Erfindung vorstehend mit Bezug auf spezifische Ausführungsformen beschrieben und veranschaulicht ist, ist diese nicht auf diese Ausführungsformen beschränkt. Vielmehr können innerhalb des Schutz- und Äquivalenzbereichs der Patentansprüche verschiedene Modifikationen von Einzelheiten vorgenommen werden, ohne dass daraus eine Abweichung von der Erfindung resultiert.

### BEZUGSZEICHENLISTE

- 1: Probe trocknen
- 2: Trockengewicht bestimmen
- 3: Probe abkühlen und Gewicht im lufttrockenen Zustand bestimmen
- 4: Probe im lufttrockenen Zustand analysieren
- 5: Wassermenge zugeben
- 6: Feuchtigkeitsgehalt bestimmen
- 7: Probe homogenisieren
- 8: Probe im befeuchteten Zustand analysieren
- 9: Analysedaten ablegen
- 10: Nahinfrarot-Spektrum einer Probe mit niedrigerem Feuchtigkeitsgehalt
- 11: Nahinfrarot-Spektrum einer Probe mit höherem Feuchtigkeitsgehalt
- 12: Spektrum-Band mit hoher Feuchtigkeitssensitivität

## Patentansprüche

1. Verfahren zur Kalibrierung eines Rohmaterialanalysesystems in Bezug auf Feuchtigkeit, welches System ein Transportmittel, auf welchem Transportmittel das Rohmaterial befördert wird, eine Lichtquelle, welche Lichtquelle das Rohmaterial bestrahlt, und ein Nahinfrarot-Spektrometer aufweist, welches Nahinfrarot-Spektrometer das von dem Rohmaterial reflektierte Licht der Lichtquelle aufnimmt und auswertet, **dadurch gekennzeichnet, dass** das Verfahren folgende Schritte umfasst:
a) Trocknen einer Probe des Rohmaterials;
b) Bestimmen des Trockengewichtes der Probe;
d) Analysieren der Probe mittels des Nahinfrarot-Spektrometers;
e) Zugeben einer bestimmten Wassermenge;
f) Bestimmen des Feuchtigkeitsgehaltes;
g) Analysieren der Probe mittels Nahinfrarot-Spektrometer;
j) Wiederholen der Schritte e bis g für verschiedene Wassermengen; und
k) Ablegen der Analysedaten für die verschiedenen Wassermengen.

2. Verfahren nach Anspruch 1, **dadurch gekennzeichnet, dass** der Schritt a) zusätzlich umfasst:
a) Trocknen der Probe durch Aufheizen der Probe.

3. Verfahren nach Anspruch 2, **dadurch gekennzeichnet, dass** der Schritt a) zusätzlich umfasst:
a) Trocknen der Probe durch Aufheizen der Probe auf mindestens 100 Grad Celsius.

4. Verfahren nach Anspruch 2 oder 3, **dadurch gekennzeichnet, dass** das Verfahren einen zusätzlichen Schritt c) umfasst:
c) Abkühlen der Probe und Bestimmen des Probengewichtes im abgekühlten Zustand.

5. Verfahren nach Anspruch 4, **dadurch gekennzeichnet, dass** der Schritt c) zusätzlich umfasst:
c) Abkühlen der Probe auf die Temperatur des Rohmaterials während der Analyse durch das System im Betrieb.

6. Verfahren nach einem der Ansprüche 1 bis 5, **dadurch gekennzeichnet, dass** der Schritt f) zusätzlich umfasst:
f) Bestimmen des Feuchtigkeitsgehaltes durch Wiegen der Probe nach Zugabe der bestimmten Wassermenge und vergleichen mit dem Trockengewicht der Probe.

7. Verfahren nach einem der Ansprüche 1 bis 6, **dadurch gekennzeichnet, dass** die Schritte d) und g) zusätzlich umfassen:
d) Drehen der Probe in einer Ebene senkrecht zum und Analysieren der Probe mittels des Nahinfrarot-Spektrometers; und
g) Drehen der Probe in einer Ebene senkrecht zum Nahinfrarot-Spektrometer und Analysieren der Probe mittels des Nahinfrarot-Spektrometers.

8. Verfahren nach einem der Ansprüche 1 bis 7, **dadurch gekennzeichnet, dass** das Verfahren einen zusätzlichen Schritt h) umfasst und der Schritt j) zusätzlich umfasst:
h) Homogenisieren der Probe; und
j) Wiederholen der Schritte e bis h für verschiedene Wassermengen.

9. Verfahren nach Anspruch 8, wobei das Rohmaterial ein Sinterrohmaterial ist, **dadurch gekennzeichnet, dass** der Schritt h) zusätzlich umfasst:
h) Homogenisieren der Probe durch Rollieren der Probe.

10. Verfahren nach Anspruch 8, **dadurch gekennzeichnet, dass** das Verfahren einen zusätzlichen Schritt i) umfasst und der Schritt j) zusätzlich umfasst:
i) Wiederholen der Schritte g und h.
j) Wiederholen der Schritte e bis i für verschiedene Wassermengen.

11. Rohmaterialanalysesystem, welches System ein Transportmittel, auf welchem Transportmittel das Rohmaterial befördert wird, eine Lichtquelle, welche Lichtquelle das Rohmaterial bestrahlt, und ein Nahinfrarot-Spektrometer aufweist, welches Nahinfrarot-Spektrometer das von dem Rohmaterial reflektierte Licht der Lichtquelle aufnimmt und auswertet, **dadurch gekennzeichnet, dass** das System in Bezug auf Feuchtigkeit des zu analysierenden Rohmaterials durch ein Verfahren nach einem der Ansprüche 1 bis 10 kalibriert ist, das System einen Datenspeicher aufweist, in welchem Analysedaten der Kalibrierung für verschiedene Wassermengen abgelegt sind, und das Nahinfrarot-Spektrometer die Analysedaten der Kalibrierung bei der Auswertung berücksichtigt.
